# EUROPÄISCHE PATENTSCHRIFT

(11) **EP 3 105 293 B1**
(45) Veröffentlichungstag und Bekanntmachung des Hinweises auf die Patenterteilung: **13.12.2017**
(21) Anmeldenummer: 14814729.1
(22) Anmeldetag: 05.12.2014
(51) Int. Cl.: C09D 9/00

(54) **MITTEL ZUM ENTSCHICHTEN VON OBERFLÄCHEN**
MEANS FOR REMOVING COATING LAYERS FROM SURFACES
PRODUIT POUR DÉCAPER DES SURFACES

(30) Priorität: 11.02.2014 WO PCT/CH2014/000019
(43) Veröffentlichungstag der Anmeldung: 21.12.2016
(73) Patentinhaber: Wetrok AG, 8302 Kloten (CH)
(72) Erfinder: WILD, Remo, CH-8600 Dübendorf (CH); LAAGER, Mirko, 8422 Pfungen (CH)
(74) Vertreter: Lusuardi, Werther
(86) Internationale Anmeldenummer: PCT/CH2014/000171
(87) Internationale Veröffentlichungsnummer: WO 2015/120562

(56) Entgegenhaltungen:
- EP-A1- 0 598 143
- EP-A1- 0 616 016
- EP-A1- 1 388 575
- EP-A1- 1 655 362
- WO-A1-00/46327
- WO-A1-93/18865
- DE-A1- 19 526 351
- DE-C1- 3 438 399

## Beschreibung

Die Erfindung bezieht sich auf ein Mittel zum Entschichten von Oberflächen, insbesondere zum Entfernen von wasserbasierten Oberflächen-Beschichtungen gemäss dem Oberbegriff der Patentansprüche 1 und 2. Die heute bekannten Mittel zu diesem Zweck weisen folgende Nachteile auf:
- hoher Zeitbedarf;
- schlechte Umweltverträglichkeit; und
- Notwendigkeit von mehreren Spülvorgängen.

Hier will die Erfindung Abhilfe schaffen. Der Erfindung liegt die Aufgabe zugrunde ein Mittel zum Entschichten von Oberflächen, insbesondere zum Entfernen von wasserbasierten Oberflächen-Beschichtungen zu schaffen, welches:
- schneller wirkt;
- gründlicher wirkt;
- umweltverträglicher ist; und
- von einer einzigen Person angewendet werden kann.
Die vorliegende Erfindung ist in den anhängenden Ansprüchen 1-15 definiert. Die Erfindung löst die gestellte Aufgabe mit einem Mittel, welches die Merkmale gemäss den Ansprüchen 1 und 2 aufweist.

Dank dem erfindungsgemässen Mittel können die oben angegebenen Ziele erreicht werden.

Weitere vorteilhafte Ausgestaltungen der Erfindung können wie folgt kommentiert werden:
Das Netzmittel kann aus folgenden Stoffgruppen ausgewählt werden:
   - alkoxylierte Acetyldiole;
   - Perfluoroalkylpolymere, insbesondere alkoxylierte Perfluoroalkylpolymere;
   - alkoxylierte Polydimethylsiloxane; und
   - Sulfosuccinate

Das Mittel kann bei einer besonderen Ausführungsform auch mehrere Ethylenglykolether und/oder mehrere Propylengykolether umfassen.

Der gesamte Anteil an Ethylenglykolether und/oder Propylengykolether beträgt vorteilhafterweise mindestens 25 %, vorzugsweise mindestens 30 % des Mittels..

Bei einer besonderen Ausführungsform enthält das Mittel keinen Tripropylenglykolether.

Der Komplexbildner kann aus folgenden Stoffgruppen ausgewählt werden:
(i) Nitriloacetate;
(ii) Carboxymethylinulin;
(iii) organische Phosphorsäureester;
(iv) Polycarbonsäuren und deren Copolymere

Bei einer besonderen Ausführungsform ist der Komplexbildner eine Aminopolycarbonsäure, insbesondere die Ethylendiamintetraessigsäure (EDTA) und ihre Salze sowie die Nitriloessigsäure (NTA).

Vorteilhafterweise ist der Komplexbildner ein vierzähniger oder sechszähniger Komplexbildner.

Bei einer besonderen Ausführungsform enthält der Komplexbildner keinen Diethylentriaminpentaessigsäure-eisen-natrium Komplex.

Bei einer speziellen Ausführungsform enthält das Mittel kein 2-amino-2-methyl-1-propanol.

Vorteilhafterweise umfasst das Mittel zusätzlich ein Antischäummittel. Das Antischäummittel kann ein Polyetherpolysiloxan, vorzugsweise ein modifiziertes Polyetherpolysiloxan sein. Das Antischäummittel hat vorteilhafterweise ein Molekulargewicht im Bereich von 7'000 bis 15'000.

Bei einer speziellen Ausführungsform umfasst das Mittel zusätzlich ein Antioxidantium, vorzugsweise Butylhydroxitoluol, Butylhydrohyanisol oder ein Gallat.

Bei einer weiteren Ausführungsform umfasst das Mittel zusätzlich ein Konservierungsmittel, vorzugsweise Methyl-isothiazolinione, Benz- isothiazolinione, Natriumbenzoat, Lysozym oder Dimethyldicarbonat.

Bei einer weiteren Ausführungsform umfasst das Mittel zusätzlich einen Klarsteller, vorzugsweise Natriumcumolsulfonat oder Diisooctylsulfosuccinat

Das Mittel weist vorzugsweise einen Trübungspunkt kleiner als 33 °C auf.

Bei einer speziellen Ausführungsform kann das Tensid kann aus folgenden Stoffgruppen ausgewählt werden:
(i) lineare Alkylbenzolsulfonate (LAS)
(ii) Alkylpolyglycoside (APG),
(iii) Esterquats EQ);
(iv) Fettalkoholethoxylate (FAEO),
(v) Fettalkoholsulfate (FAS); und
(vi) Fettalkoholethersulfate (FES)

Bei einer speziellen Ausführungsform umfasst das Mittel kein Diisooctylsuccinat-natrium-sulfonat.

Das Mittel kann je nach Anwendungsgebiet mit 2 bis 99 Teilen Wasser verdünnt werden.

Der pH- Wert des Mittels liegt zweckmässigerweise zwischen 7,0 und 9,0. Bei einer besonderen Ausführungsform beträgt der pH- Wert maximal 8,5 vorzugsweise maximal 8,0.

Vorteilhafterweise liegt der Anteil an Glykolether am gesamten Mittel im Bereich von 20 - 50 Gew.%, vorzugsweise im Bereich von 25 - 40 Gew.-% .

Der Anteil an Netzmittel am gesamten Mittel liegt vorteilhafterweise im Bereich von 0,05 - 0,20 Gew.%, vorzugsweise im Bereich von 0,09 - 0,15 Gew.-%.

Der Anteil an Komplexbildner am gesamten Mittel beträgt vorteilhafterweise mindestens 3 Gew.%, vorzugsweise mindestens 3,5 Gew-%.

Der Anteil an Komplexbildner am gesamten Mittel beträft vorteilhafterweise maximal 10 Gew.%, vorzugsweise maximal 5 Gew-%.

Der Anteil an Wasser am gesamten Mittel liegt vorteilhafterweise im Bereich von 32 - 75 Gew.%, vorzugsweise im Bereich von 50 - 60 Gew.-% .

Bei einer speziellen Ausführungsform weist der Komplexbildner einen Substitutionsgrad von 2,5 auf.

Das Mittel weist vorteilhafterweise eine Oberflächenspannung im Bereich von 22 - 35 mN/m, vorzugsweise von < 28 mN/m auf.

Das Mittel weist nach einer 50%-igen Verdünnung mit Wasser vorteilhafterweise eine Oberflächenspannung im Bereich von 22 - 35 mN/m, vorzugsweise von < 28 mN/m auf.

Das Mittel eignet sich insbesondere zum Entschichten von Oberflächen, z.B. zum Entfernen von wasserbasierten Oberflächen-Beschichtungen.

Ein erfindungsgemässes Verfahren zum Entschichten von Oberflächen, insbesondere zum Entfernen von wasserbasierten Oberflächen-Beschichtungen zeichnet sich durch folgende Schritte aus:
a) maschinelles Scheuer-Saugen (scrubber-drying) der zu behandelnden Oberfläche mit dem erfindungsgemässen Mittel; und vorzugsweise
b) nur einmaliges Spülen mit Wasser.

Die Erfindung und Weiterbildungen der Erfindung werden im Folgenden anhand mehrerer Ausführungsbeispiele noch näher erläutert.

### Beispiel 1

a) 66,9 Gew.-% Wasser
b) 25 Gew.-% Propylenglykol-methylether (1-Methoxy-2-propanol)
c) 5 Gew.-% Carboxymethylinulin (als Komplexbildner)
d) 3 Gew.-% Alkylpolyglycosid (als Tensid)
e) 0,1 Gew.-% Natrium-sulfosuccinat mit fluor-aliphatischen Seitenketten (als Netzmittel)

### Beispiel 2

a) 60 Gew.-% Wasser
b) 3 Gew.-% Natriumcumolsulfonat (als Klarsteller/(Hydrotrop)
c) 30 Gew.-% Propylenglykol-monoethylether-acetat
d) 2,5 Gew.-% EOPO modifiziertes, lineares Tridacanol (C13 8 EO) (als Tensid)
e) 0,5 Gew.-% Diisooctylsulfosuccinat (als Netzmittel)
f) 4 Gew.-% Nitrilotriacetat (als Komplexbildner)

### Beispiel 3

a) 31,7 Gew.-% Wasser
b) 45 Gew.-% Butyldiglycol
c) 10 Gew.-% 2-Phenoxyethanol
d) 3 Gew.-% C12-18 aliphatisches Fettalkoholethoxylat (als Tensid)
e) 3 Gew.-% Amino-Methyl-Propanol
f) 7 Gew.-% Ethanol
g) 0,3 Gew.-% ethoxyliertes Acetyldiol (als Netzmittel)
h) 3 Gew.-% EDDSNa₃ (als Komplexbildner)

### Beispiel 4

a) 31,5 Gew.-% Wasser
b) 30 Gew.-% Butyldiglycol
c) 10 Gew.-% 2-Phenoxyethanol
d) 3 Gew.-% C10-14 aliphatisches Fettalkoholethoxylat (als Tensid)
e) 5 Gew.-% Limonene
f) 20 Gew.-% 3-Methoxy-3-Methyl-Butanol-1
g) 0,5 Gew.-% alkoxyliertes Polymethylsiloxan (als Netzmittel)
h) 4 Gew.-% MGDA (als Komplexbildner)

Obwohl wie oben beschrieben verschiedene Ausführungsformen der vorliegenden Erfindung vorliegen, sind diese so zu verstehen, dass die verschiedenen Merkmale sowohl einzeln als auch in jeder beliebigen Kombination verwendet werden können.

Diese Erfindung ist daher nicht einfach auf die oben erwähnten, besonders bevorzugten Ausführungsformen beschränkt.

## Patentansprüche

1. Mittel zum Entschichten von Oberflächen, insbesondere zum Entfernen von wasserbasierten Oberflächen-Beschichtungen, welches folgende Komponenten umfasst:
a) ein organisches Lösungsmittel ausgewählt aus einer der folgenden Gruppen
(i) Ethylenglykolether; Polyethylenglykolether, insbesondere Diethylenglykolether; Ethylenglykolester; Propylenglykolether; und Dipropylenglykolether;
(ii) ein monozyklisches Monoterpen;
(iii) Amino-methyl-propanol;
(iv) Methoxy-methyl-butanol;
(v) dibasische Ester;
(vi) Kohlensäureester;
(vii) γ-Butyrolacton;
(viii) Alkylamide;
oder Gemische davon;
b) ein von Komponente a) verschiedenes Netzmittel, dessen Anteil am gesamten Mittel im Bereich von 0,01 - 0,20 Gew.% liegt und aus folgenden Stoffgruppen ausgewählt ist:
- alkoxylierte Acetyldiole;
- Perfluoroalkylpolymere,
- alkoxylierte Polydimethylsiloxane; und
- Sulfosuccinate.
c) ein von Komponente a) verschiedenes Tensid, welches die Oberflächenspannung von Wasser auf unter 45 mN/m drückt;
d) einen von Komponente a) verschiedener Komplexbildner; und
e) Wasser.

2. Mittel zum Entschichten von Oberflächen, insbesondere zum Entfernen von wasserbasierten Oberflächen-Beschichtungen welches folgende Komponenten umfasst:
a) ein organisches Lösungsmittel ausgewählt aus einer der folgenden Gruppen
(i) Ethylenglykolether; Polyethylenglykolether, insbesondere Diethylenglykolether; Ethylenglykolester; Propylenglykolether; und Dipropylenglykolether;
(ii) ein monozyklisches Monoterpen;
(iii) Amino-methyl-propanol;
(iv) Methoxy-methyl-butanol;
oder Gemische davon;
b) ein Netzmittel, dessen Anteil am gesamten Mittel im Bereich von 0,05 - 0,20 Gew.% liegt und aus folgenden Stoffgruppen ausgewählt ist:
- alkoxylierte Acetyldiole;
- Perfluoroalkylpolymere,
- alkoxylierte Polydimethylsiloxane; und
- Sulfosuccinate.
c) ein aus folgenden Stoffgruppen ausgewähltes Tensid:
(i) lineare Alkylbenzolsulfonate (LAS);
(ii) Alkylpolyglycoside (APG);
(iii) Esterquats EQ);
(iv) Fettalkoholalkoxylate;
(v) Fettalkoholsulfate (FAS); und
(vi) Fettalkoholethersulfate (FES).
d) einen Komplexbildner, dessen Anteil am gesamten Mittel im Bereich von 3 - 5 Gew.% liegt; und
der aus folgenden Stoffgruppen ausgewählt ist:
(i) Nitriloacetate;
(ii) Carboxymethylinulin;
(iii) organische Phosphorsäureester;
(iv) Polycarbonsäuren und deren Copolymere;
(v) Aminopolycarbonsäuren; oder.
(vi) vierzähnige oder sechszähnige Komplexbildner.
und
e) Wasser, dessen Anteil am gesamten Mittel im Bereich von 32 - 75 Gew.% liegt.

3. Mittel nach Anspruch 1 oder 2, **dadurch gekennzeichnet, dass** das Netzmittel ein alkoxyliertes Perfluoroalkylpolymer ist.

4. Mittel nach einem der Ansprüche 1 bis 3, **dadurch gekennzeichnet, dass** es mehrere Ethylenglykolether und/oder mehrere Propylengykolether umfasst.

5. Mittel nach einem der Ansprüche 1 bis 4, **dadurch gekennzeichnet, dass** es kein 2-amino-2-methyl-1-propanol enthält.

6. Mittel nach einem der Ansprüche 1 bis 5, **dadurch gekennzeichnet, dass** es zusätzlich ein Antischäummittel umfasst.

7. Mittel nach einem der Ansprüche 1 bis 6, **dadurch gekennzeichnet, dass** es zusätzlich ein Antioxidantium umfasst, vorzugsweise Butylhydroxitoluol, Butylhydrohyanisol oder ein Gallat.

8. Mittel nach einem der Ansprüche 1 bis 7, **dadurch gekennzeichnet, dass** es zusätzlich ein Konservierungsmittel umfasst, vorzugsweise Methyl-isothiazolinione, Benz- isothiazolinione, Natriumbenzoat, Lysozym oder Dimethyldicarbonat.

9. Mittel nach einem der Ansprüche 1 bis 8, **dadurch gekennzeichnet, dass** es zusätzlich einen Klarsteller umfasst, vorzugsweise Natriumcumolsulfonat oder Diisooctylsulfosuccinat

10. Mittel nach einem der Ansprüche 1 bis 9, **dadurch gekennzeichnet, dass** es kein Diisooctylsuccinat-natrium-sulfonat enthält

11. Mittel nach einem der Ansprüche 1 bis 10, **dadurch gekennzeichnet, dass** der Anteil an Netzmittel am gesamten Mittel maximal 0,20 Gew.%, vorzugsweise maximal 0,15 Gew.% beträgt.

12. Mittel nach einem der Ansprüche 1 bis 11, **dadurch gekennzeichnet, dass** der Anteil an Netzmittel am gesamten Mittel minimal 0,05 Gew.-%, vorzugsweise minimal 0,09 Gew.-% beträgt.

13. Verwendung des Mittels nach einem der Ansprüche 1 bis 12 zum Entschichten von Oberflächen, insbesondere zum Entfernen von wasserbasierten Oberflächen-Beschichtungen.

14. Verfahren zum Entschichten von Oberflächen, insbesondere zum Entfernen von wasserbasierten Oberflächen-Beschichtungen, **dadurch gekennzeichnet, dass** die zu behandelnde Oberfläche mit dem Mittel gemäss einem der Ansprüche 1 bis 12 einem maschinellen Scheuer-Saugen unterworfen wird.

15. Verfahren nach Anspruch 14, **dadurch gekennzeichnet, dass** die behandelte Oberfläche nur einmal mit Wasser gespült wird.

## Claims

1. A means for removing coating layers from surfaces, in particular for removing water-based surface coatings which comprises the following components:
a) an organic solvent selected from one of the following groups
(i) Ethylene glycol ether; polyethylene glycol ether, in particular diethylene glycol ether; ethylene glycol ester; propylene glycol ether; and dipropylene glycol ether;
(ii) a monocyclic monoterpene;
(iii) Amino methyl propanol;
(iv) Methoxymethyl butanol;
(v) Dibasic ester;
(vi) Carbonic acid ester;
(vii) γ-Butyrolactone;
(viii) Alkylamides;
or their mixtures;
b) a wetting agent different from component a), whose proportion in the total means is in the range of 0.01 - 0.20 wt% and is selected from the following substance groups:
- Alkoxylated acetyl diols;
- Perfluoroalkyl copolymers,
- Alkoxylated polydimethyl siloxanes; and
- Sulfosuccinates.
c) a surfactant different from component a), which presses the surface tension of water to below 45 mN/m;
d) A complexing agent different from component a); and
e) water.

2. A means for removing coating layers from surfaces, in particular for removing water-based surface coatings, which comprises the following components:
a) an organic solvent selected from one of the following groups
(i) Ethylene glycol ether; polyethylene glycol ether, in particular diethylene glycol ether, ethylene glycol ester; propylene glycol ether; and dipropylene glycol ether;
(ii) a monocyclic monoterpene;
(iii) Amino methyl propanol;
(iv) Methoxymethyl butanol;
or their mixtures;
b) a wetting agent whose proportion of the total means is in the range of 0.05 - 0.20 wt% and is selected from the following groups:
- alkoxylated acetyl diols;
- perfluoroalkyl polymers,
- alkoxylated polydimethyl siloxanes; and
- sulfosuccinates.
c) A surfactant selected from the following substance groups:
(i) linear alkylbenzene sulfonates (LAS),
(ii) alkyl polyglycosides (APG),
(iii) ester quats (EQ);
(iv) fatty alcohol alkoxylates;
(v) fatty alcohol sulfates (FAS); and
(vi) fatty alcohol ether sulfates (FES).
d) A complexing agent whose proportion of the total means is in the range of 3 - 5 wt%; and
which is selected from the following substance groups:
(i) Nitriloacetate;
(ii) Carboxymethylinulin;
(iii) Organic phosphoric acid esters;
(iv) Polycarboxylic acids and their copolymers;
(v) Aminopolycarboxylic acids; or
(vi) Tetradentate or hexadentate complexing agents and
e) water, whose proportion in the total means is in the range of 32 - 75 wt%.

3. The means according to Claim 1 or 2, **characterized in that** the wetting agent is an alkoxylated perfluoroalkyl polymer.

4. The means according to one of Claims 1 to 3, **characterized in that** it comprises several ethylene glycol ethers and/or several propylene glycol ethers.

5. The means according to one of Claims 1 to 4, **characterized in that** it contains no 2-amino-2-methyl-1-propanol.

6. The means according to one of Claims 1 to 5, **characterized in that** it additionally comprises an antifoaming agent.

7. The means according to one of Claims 1 to 6, **characterized in that** it additionally comprises an antioxidant, preferably butylhydroxy toluene, butylhydroxy anisole or a gallate.

8. The means according to one of Claims 1 to 7, **characterized in that** it additionally comprises a preservative agent, preferably methylisothiazolinones, benzisothiazolinones, sodium benzoate, lysozyme or dimethyldicarbonate.

9. The means according to one of Claims 1 to 8, **characterized in that** it additionally comprises a clarifier, preferably sodium cumolsulfonate or diisooctylsulfosuccinate.

10. The means according to one of Claims 1 to 9, **characterized in that** it contains no diisooctylsuccinate-sodium-sulfonate.

11. The means according to one of Claims 1 to 10, **characterized in that** the proportion of wetting agent in the total means is a maximum of 0.20 wt%, preferably a maximum of 0.15 wt%.

12. The means according to one of Claims 1 to 11, **characterized in that** the proportion of wetting agent in the total means is a minimum 0.05 wt%, preferably a minimum of 0.09 wt%.

13. A use of the means according to one of Claims 1 to 12 for removing coating layers from surfaces, in particular for removing water-based coatings.

14. A method for removing coating layers from surfaces, in particular for removing water-based coatings, **characterized in that** the surface to be treated with the means according to one of Claims 1 to 12 is subjected to a machine scrubber-drying.

15. The method according to Claim 14, **characterized in that** the treated surface is washed only once with water.

## Revendications

1. Produit pour décaper des surfaces, en particulier pour enlever des revêtements de surface à base d'eau, qui comprend les composants suivants :
a) un solvant organique sélectionné parmi un des groupes suivants
(i) éther d'éthylèneglycol, éther de polyéthylèneglycol, en particulier éther de diéthylèneglycol ; ester d'éthylèneglycol ; éther de propylèneglycol ; et éther de dipropylèneglycol ;
(ii) un monoterpène monocyclique ;
(iii) amino-méthyl-propanol ;
(iv) méthoxy-méthyl-butanol ;
(v) ester dibasique ;
(vi) ester d'acide carbonique ;
(vii) γ-butyrolactone ;
(viii) alkylamide ;
ou des mélanges de ceux-ci;
b) un agent mouillant différent du composant a), dont la proportion dans le produit total se situe dans la plage de 0,01 - 0,20 % en poids et qui est sélectionné parmi les groupes de substances suivants :
- acétyldiols alcoxylés,
- polymères perfluoroalkyles,
- polydiméthylsiloxanes alcoxylés ; et
- sulfosuccinates
c) un tensioactif différent du composant a), qui réduit la tension superficielle de l'eau à moins de 45 mN/m ;
d) un agent complexant différent du composant a) ; et
e) de l'eau.

2. Produit pour décaper des surfaces, en particulier pour enlever des revêtements de surface à base d'eau, qui comprend les composants suivants :
a) un solvant organique sélectionné parmi un des groupes suivants
(i) éther d'éthylèneglycol, éther de polyéthylèneglycol, en particulier éther de diéthylèneglycol ; ester d'éthylèneglycol ; éther de propylèneglycol ; et éther de dipropylèneglycol ;
(ii) un monoterpène monocyclique ;
(iii) amino-méthyl-propanol ;
(iv) méthoxy-méthyl-butanol ;
ou des mélanges de ceux-ci ;
b) un agent mouillant dont la proportion dans le produit total se situe dans la plage de 0,05 - 0,20 % en poids et qui est sélectionné parmi les groupes de substances suivants;
- acétyldiols alcoxylés ;
- polymères perfluoroalkyles,
- polydiméthylsiloxanes alcoxylés ; et
- sulfosuccinates.
c) un tensioactif sélectionné parmi les groupes de substances suivants :
(i) alkylbenzènesulfonates linéaires (LAS) ;
(ii) alkylpolyglucosides (APG) ;
(iii) esterquats (EQ) ;
(iv) alcoxylats d'alcool gras ;
(v) sulfates d'alcool gras (FAS) ; et
(vi) éther sulfates d'alcool gras (FES)
d) un agent complexant dont la proportion dans le produit total se situe dans la plage de 3 - 5 % en poids ; et
qui est sélectionné parmi les groupes de substances suivants :
(i) nitriloacétates ;
(ii) carboxyméthylinuline ;
(iii) esters d'acide phosphorique organiques ;
(iv) acides polycarboxyliques et leurs copolymères ;
(v) acides aminopolycarboxyliques ; ou
(vi) agents complexants tétradentates ou hexadentates
et
e) de l'eau dont la proportion dans le produit total se situe dans la plage de 32 - 75 % en poids.

3. Produit selon la revendication 1 ou 2, **caractérisé en ce que** l'agent mouillant est un polymère perfluoroalkyl alcoxylé.

4. Produit selon l'une des revendications 1 à 3, **caractérisé en ce qu'**il comprend plusieurs éthers d'éthylèneglycol et/ou plusieurs éthers de polyéthylèneglycol.

5. Produit selon l'une des revendications 1 à 4, **caractérisé en ce qu'**il ne contient pas de 2-amino-2-méthyl-1-propanol.

6. Produit selon l'une des revendications 1 à 5, **caractérisé en ce qu'**il comprend en plus un produit antimousse.

7. Produit selon l'une des revendications 1 à 6, **caractérisé en ce qu'**il contient en plus un antioxydant, de préférence du butylhydroxytoluène, du butylhydrohyanisol ou un gallate.

8. Produit selon l'une des revendications 1 à 7, **caractérisé en ce qu'**il contient en plus un agent de conservation, de préférence de la méthylisothiazolinione, de la benzisothiazolinione, du benzoate de sodium, du lysozyme ou du dicarbonate de diméthyle.

9. Produit selon l'une des revendications 1 à 8, **caractérisé en ce qu'**il contient en plus un éclaircissant, de préférence du cumène sulfonate de sodium ou du sulfosuccinate de diisooctyle.

10. Produit selon l'une des revendications 1 à 9, **caractérisé en ce qu'**il ne contient pas de succinate de diisooctyle - sulfonate de sodium.

11. Produit selon l'une des revendications 1 à 10, **caractérisé en ce que** la proportion d'agent mouillant dans le produit total est au maximum de 0,20 % en poids, de préférence au maximum de 0,15 % en poids.

12. Produit selon l'une des revendications 1 à 11, **caractérisé en ce que** la proportion d'agent mouillant dans le produit total est au minimum de 0,05 % en poids, de préférence au minimum de 0,09 % en poids.

13. Utilisation du produit selon l'une des revendications 1 à 12 pour décaper des surfaces, en particulier pour enlever des revêtements de surface à base d'eau.

14. Procédé pour décaper des surfaces, en particulier pour enlever des revêtements de surface à base d'eau, **caractérisé en ce que** la surface à traiter avec le produit selon l'une des revendications 1 à 12 est soumise à une opération de récurage/aspiration mécanique.

15. Procédé selon la revendication 14, **caractérisé en ce que** la surface traitée n'est lavée à l'eau qu'une seule fois.
